Europäisches Patentamt

European Patent Office

Office européen des brevets

(19)

(11) Veröffentlichungsnummer : **0 561 915 B1**

(12) **EUROPÄISCHE PATENTSCHRIFT**

(45) Veröffentlichungstag der Patentschrift :
13.07.94 Patentblatt 94/28

(51) Int. Cl.⁵ : **F16D 23/06**

(21) Anmeldenummer : **92900850.6**

(22) Anmeldetag : **14.12.91**

(86) Internationale Anmeldenummer :
**PCT/EP91/02411**

(87) Internationale Veröffentlichungsnummer :
**WO 92/11473 09.07.92 Gazette 92/17**

(54) **SCHALTKUPPLUNG MIT EINER SYNCHRONISIEREINRICHTUNG.**

(30) Priorität : **17.12.90 DE 4040330**

(43) Veröffentlichungstag der Anmeldung :
**29.09.93 Patentblatt 93/39**

(45) Bekanntmachung des Hinweises auf die
Patenterteilung :
**13.07.94 Patentblatt 94/28**

(84) Benannte Vertragsstaaten :
**DE ES FR GB IT**

(56) Entgegenhaltungen :
**EP-A- 0 195 706**
**DE-B- 2 659 448**
**DE-C- 3 728 902**
**US-A- 4 830 158**

(73) Patentinhaber : **ZAHNRADFABRIK
FRIEDRICHSHAFEN AG
Löwentaler Strasse 100,
Postfach 2520
D-88015 Friedrichshafen (DE)**

(72) Erfinder : **RAUE, Reimund
Weiherstrasse 32/1
D-7990 Friedrichshafen (DE)**

(74) Vertreter : **Raue, Reimund
ZF FRIEDRICHSHAFEN AG
D-88038 Friedrichshafen (DE)**

EP 0 561 915 B1

EP 0 561 915 B1

## Beschreibung

Die Erfindung betrifft eine Schaltkupplung mit einer Synchronisiereinrichtung, die einen Kupplungskörper hat, der mit einem drehbar auf einer Welle gelagerten Zahnrad drehfest verbunden ist und Kuppelzähne sowie einen Reibkonus aufweist. Sie hat ferner einen Synchronisierring mit einem Gegenkonus und Sperrzähnen sowie eine Muffe, die Schaltzähne besitzt, von denen wenigstens ein Teil über stirnseitige Schrägflächen mit Sperrflächen an den Sperrzähnen zusammenarbeitet. Die Muffe ist auf einer Muffenführung axial verschiebbar geführt, die drehfest mit der Welle verbunden ist.

In Schaltgetrieben, die unter Zugkraftunterbrechung geschaltet werden, d. h., daß eine Eingangswelle während des Schaltvorgangs durch eine Kupplung von einer Antriebsmaschine getrennt wird, kann man den jeweiligen Gang mit einer Schaltkupplung der eingangs beschriebenen Art einlegen, indem das auf der Welle umlaufende Zahnrad, das zu dem Gang gehört, mit der Welle gekuppelt wird. Dabei wird das Drehmoment im geschalteten Zustand vom Zahnrad über den Kupplungskörper, die Kuppelzähne, die Schaltzähne, die Schaltmuffe und die Muffenführung auf die Welle übertragen. Der geschaltete Gang bestimmt das Übersetzungsverhältnis und damit das Drehzahlverhältnis zwischen der Eingangswelle und einer Ausgangswelle des Getriebes. Die frei umlaufenden, ständig im Eingriff befindlichen Zahnräder der übrigen Gänge laufen mit einer ihrer Übersetzung entsprechenden Drehzahl, und zwar laufen die Zahnräder einer niedrigeren Untersetzungsstufe, was einem höheren Gang entspricht, schneller als die einer höheren Untersetzungsstufe.

Damit die Schaltzähne der Muffe in die Kuppelverzahnung des Kupplungskörpers eingreifen können, müssen die zu kuppelnden Teile vorher auf eine gleiche Drehzahl gebracht werden. Hierzu dient die Synchronisiereinrichtung. Sie besteht im wesentlichen aus dem Reibkonus am Kupplungskörper und dem Synchronisierring mit seinem Gegenkonus und den Sperrzähnen. Der Synchronisierring läuft mit der Muffe um, kann sich jedoch gegenüber dieser um einen begrenzten Winkel drehen.

Bewegt man die Muffe in Richtung des zu schaltenden Zahnrades, wird der Synchronisierring mit seinem Gegenkonus gegen den Konus des Kupplungskörpers gelangen. Dabei verdreht er sich relativ zur Muffe, so daß die Schrägflächen der Schaltverzahnung auf die Sperrflächen der Sperrzähne stoßen. Dadurch wird eine Axialkraft auf den Synchronisierring ausgeübt. Die Schaltkraft erzeugt gleichzeitig über die Schrägflächen eine Rückstellkraft auf den Synchronisierring. Bei Gleichlauf der Teile überwiegt die Rückstellkraft die an den Reibflächen wirkende Umfangskraft und bringt den Synchronisierring in eine Mittelstellung, bei der die Muffe durchgeschaltet werden kann.

Unter normalen Bedingungen, d. h. bei Temperaturen, für die die Viskosität des Getriebeöls bestimmt ist, bleibt der Gleichlauf der zu kuppelnden Teile nach der Synchronisierung aufgrund der Massenträgheit solange erhalten, bis die Schaltung vollständig aufgeführt ist. Bei niedrigeren Temperaturen, bei denen das Getriebeöl eine höhere Viskosität hat, bremst das Getriebeöl die beim Schaltvorgang vom Antrieb entkuppelten Teile stark ab. Soll nun von einer höheren Untersetzungsstufe, von einem niedrigeren Gang, in eine niedrigere Untersetzungsstufe, also in einen höheren Gang geschaltet werden, wird das zunächst schneller laufende Zahnrad sowohl von der Synchronisiereinrichtung als auch von der höheren Ölviskosität abgebremst. Es durchläuft daher schon nach kurzer Zeit den Synchronpunkt, bei dem sich der Synchronisierring gegenüber der Schaltmuffe in entgegengesetzter Richtung verdreht. In der Mittelstellung wird der Schaltweg kurzfristig freigegeben und die Schaltzähne greifen durch die Zwischenräume der Sperrzähne. Da nun keine Axialkraft auf den Synchronisierring mehr ausgeübt wird, fällt das zu kuppelnde Zahnrad noch mehr in der Drehzahl ab, so daß die Schaltzähne der Muffe an den Kuppelzähnen vorbeikratzen, bevor sie einrücken. Die entstehenden Geräusche, das "Kaltkratzen", werden als störend empfunden.

Es ist bekannt (DE-Cl 34 44 670), daß die in Laufrichtung vordere Schrägfläche an der Schaltmuffe eine größere axiale Ausdehnung aufweist als die in Laufrichtung hintere Schrägfläche. Dadurch erreicht man, daß beim Durchgang durch den Synchronpunkt die in Laufrichtung vorne liegende Schrägfläche an der Sperrfläche des benachbarten Sperrzahns eine Axialkraft aufbaut, und damit ein weiteres Abfallen der Drehzahl des zu kuppelnden Zahnrades verhindert.

Die Gestaltung ergibt asymmetrische Schrägflächen an der Schaltverzahnung, so daß die gleiche Verzahnung nicht für unterschiedliche Laufrichtungen verwendet werden kann. Dadurch ergeben sich bei verschiedenen Anwendungen eine Teilevielzahl, ein erhöhter Fertigungs- und Lageraufwand sowie die Möglichkeit der Fehlmontage.

Der Erfindung liegt die Aufgabe zugrunde, einen weiteren Weg aufzuzeigen, das "Kaltkratzen" zu vermeiden. Sie wird erfindungsgemäß dadurch gelöst, daß die Sperrzähne in Umfangsrichtung unterschiedlich breit sind, so daß die schmaleren, in Räumen zwischen den Schaltzähnen ein größeres Spiel haben als die breiteren und daß beim Schalten die Sperrflächen der schmaleren Sperrzähne eher die Schrägflächen der Schaltzähne berühren als die der breiteren Sperrzähne.

Beim Durchgang durch den Synchronpunkt erzeugen die Schaltzähne an den Sperrflächen der breiteren

2

Sperrzähne erneut eine Axialkraft, die eine Nachsynchronisierung bewirkt. Um zu erreichen, daß die Sperrflächen der schmaleren Sperrzähne eher die Schrägflächen der Schaltzähne berühren als die breiteren Sperrzähne wird in Ausgestaltung der Erfindung vorgeschlagen, daß die breiteren Sperrzähne axial kürzer sind als die schmaleren. Bei einer anderen Variante der Erfindung kann die axiale Erstreckung der Sperrzähne im wesentlichen gleich sein, in diesem Fall müssen aber die Schaltzähne, die die Zwischenräume für die breiteren Sperrzähne bilden, axial kürzer gewählt werden. Es ist auch denkbar, beide Maßnahmen kombiniert zu verwenden.

Da die Nachsynchronisierung nur bei ungünstigen Betriebsbedingungen und somit relativ selten auftritt und die Synchonisierarbeit gering ist, reicht es in der Regel aus, nur wenige breitere Sperrzähne vorzusehen. Es ist daher zweckmäßig, mehr schmalere Sperrzähne als breitere Sperrzähne vorzusehen.

Bei der erfindungsgemäßen Gestaltung können die Schrägflächen und Sperrflächen symmetrisch und mit gleichen Winkeln ausgelegt werden, so daß die Bauteile unabhängig von der Drehrichtung verwendet werden können. Eine Teilevielfalt und Fehlmontage wird somit vermieden.

In der Zeichnung sind Ausführungsbeispiele der Erfindung dargestellt.

Fig. 1 zeigt einen Längsschnitt durch einen Rädersatz eines 3-Gang-Schaltgetriebes mit Rückwärtsgang.
Fig. 2 zeigt teilweise eine Abwicklung einer Schaltverzahnung, Sperrverzahnung und Kuppelverzahnung.
Fig. 3 zeigt eine Variante von Fig. 2.

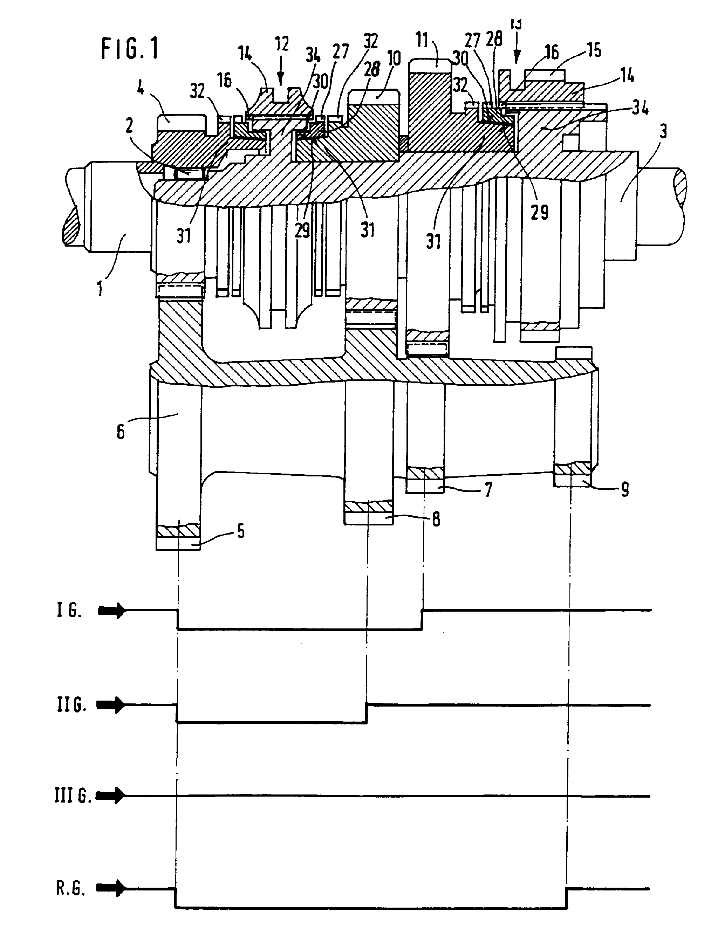

Das Getriebe nach Fig. 1 hat eine Eingangswelle 1, die über ein Wälzlager auf einer Welle 3, die als Abtriebswelle dient, gelagert ist. Über Zahnräder 4 und 5 wird eine Vorgelegewelle 6 angetrieben, die ein Zahnrad 7 für den ersten Gang, ein Zahnrad 8 für den zweiten Gang und ein Zahnrad 9 für den Rückwärtsgang hat. Die Zahnräder 7 und 8 stehen in ständigem Eingriff mit Zahnrädern 11 und 10, die sich auf der Welle 3 frei drehen können und über Schaltkupplungen 12, 13 mit der Welle 3 drehfest verbunden werden können. Die Schaltkupplung 12 verbindet im dritten Gang die Eingangswelle 1 unmittelbar mit der Welle 3, so daß ein direkter Durchtrieb durch das Getriebe gebildet wird. Die Schaltkupplung 13 weist an ihrer Muffe 14 ein Verschiebezahnrad 15 auf, mit dem der Rückwärtsgang geschaltet werden kann.

Die Schaltkupplung 12 ist gegenüber der Schaltkupplung 13 als Doppelkupplung ausgebildet. Trotzdem werden gleichwirkende Teile der Schaltkupplungen 12, 13 mit gleichen Bezugszeichen versehen. Die Schaltkupplungen 12, 13 bestehen im wesentlichen aus der Muffe 14 mit einer Schaltverzahnung 16, die Schaltzähne 17, 18 mit Schrägflächen 19, 20 hat. Diese bilden in Schaltrichtung 21 einen Keil und arbeiten mit Sperrflächen 22, 23 an Sperrzähnen 24, 25, 26 einer Sperrverzahnung 27 zusammen. Die Sperrverzahnung 27 ist an einem Synchronisierring 28 angeordnet, dessen Gegenkonus 29 mit einem Reibkonus 30 an einem Kupplungskörper 31 zusammenarbeitet. Dieser trägt eine Kuppelverzahnung 32 mit Kuppelzähnen 33 und ist mit den Zahnrädern 10, 11 bzw. der Antriebswelle 1 drehfest verbunden.

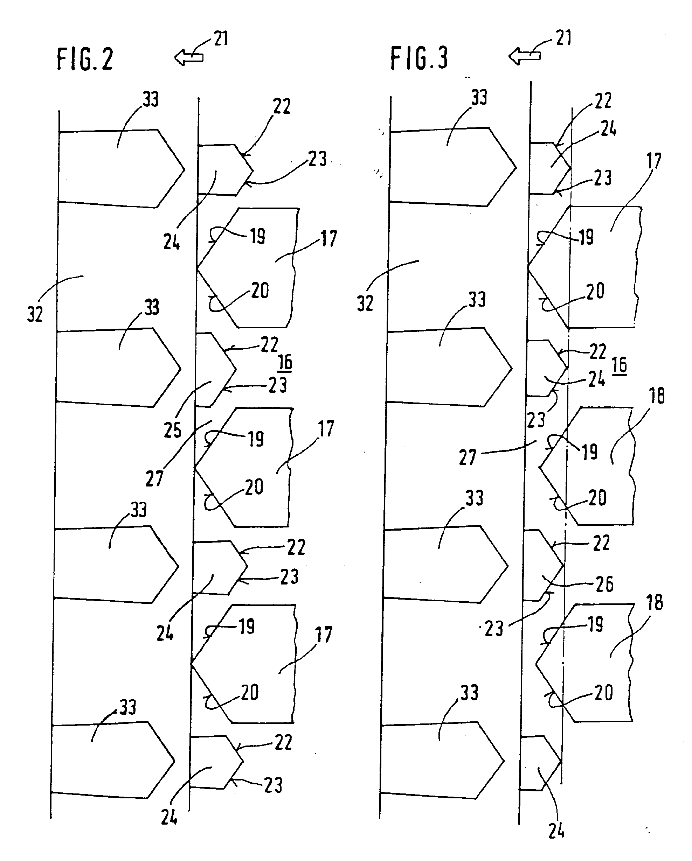

Die Kupplungsverzahnung 32 ist in der Ausführung nach Fig. 2 und 3 gleich. Die Sperrverzahnung 27 hat unterschiedliche Sperrzähne und zwar in Umfangsrichtung schmalere 24 und breitere 25 (Fig. 2) oder 26 (Fig. 3). Da in der Regel die breiteren Sperrzähne 25, 26 in der Minderzahl sind, ist in Fig. 2 und 3 jeweils nur einer dargestellt.

In der Ausführung nach Fig. 2 sind die Schaltzähne 17 in axialer Richtung gleich lang und sind in Umfangsrichtung in ihrer Breite auf die Zwischenräume der Kupplungsverzahnung 32 abgestimmt. Der breitere Sperrzahn 25 ist axial etwas kürzer als die schmaleren Sperrzähne 24, so daß seine Sperrflächen 22 und 23 erst nach einem etwas größeren Schaltweg mit den Schrägflächen 20 oder 19 in Berührung kommt.

In der Ausführung nach Fig. 3 sind die schmaleren Sperrzähne 24 und der breitere Sperrzahn 26 im wesentlichen gleich lang. Dafür sind die Schaltzähne 18, die dem breiteren Sperrzahn 26 benachbart sind, entsprechend verkürzt.

Die Schaltkupplungen wirken auf folgende Weise:

Der erste Gang ist geschaltet, wenn das Zahnrad 11 durch die Schaltkupplung 13 mit der Welle 3 gekuppelt ist. Aufgrund der Übersetzungsverhältnisse dreht das Zahnrad 10 schneller als die Welle 3. Wird nun zum zweiten Gang gewechselt, öffnet die Schaltkupplung 13 und das Zahnrad 10 muß durch die Schaltkupplung 12 mit der Welle 3 gekuppelt werden. Dazu muß es auf die Drehzahl der Welle 3 abgebremst werden. Dies erfolgt durch den Synchronisierring 28, der mit seinem Gegenkonus 29 auf den Reibkonus 30 des Kupplungskörpers 31 einwirkt und diesen abbremst. Der Synchronisierring 28 wird dabei gegenüber der Muffe 14 um einen begrenzten Drehwinkel verdreht, so daß bei der Schaltbewegung in Richtung des Pfeiles 21 je nach Laufrichtung die Schrägflächen 19 oder 20 der Schaltzähne 17 zunächst auf die Sperrflächen 23 oder 22 der schmalen Sperrzähne 24 treffen. Die Schaltverzahnung 16 wird dadurch gehindert, in die Kuppelverzahnung 32 einzugreifen, bevor Gleichlauf erreicht wird. Dabei übt die Muffe 14 eine Axialkraft auf den Synchronisierring 28 aus und bremst damit über den Reibkonus das Zahnrad 10 mit dem Kupplungskörper 31 ab.

Bei normalen Betriebstemperaturen sind die Massenträgheitsmomente im Verhältnis zu den Schleppmomenten, die durch die Ölviskosität hervorgerufen werden so groß, daß die zu kuppelnden Teile im Gleichlauf-

3

punkt ausreichend lange beharren, so daß die Schaltverzahnung 16 ungestört in die Kupplungsverzahnung 32 eingreift. Übersteigen jedoch die Schleppmomente wegen der höheren Viskosität des Öls bei niedrigen Temperaturen ein gewisses Maß, wird der Gleichlaufpunkt sehr schnell durchfahren und der Synchronisierring 28 gegenüber der Muffe 14 in Gegenrichtung verstellt. Hierbei wechselt die Anlage zwischen den Schrägflächen 19, 20 und den Sperrflächen 22, 23 und eine Sperrfläche 22 oder 23 des breiteren Sperrzahn 25, 26 trifft auf eine benachbarte Schrägfläche 20 bzw. 19 der Schaltverzahnung 16. Die Überdekkung entspricht der Differenz der Spiele, die die schmalen Sperrzähnen 24 und die breiten Sperrzähnen 25, 26 in der Schaltverzahnung 16 haben.

Die Schaltverzahnung 16 erzeugt wieder eine Axialkraft. Dadurch wird das Zahnrad 10 wieder auf Gleichlauf mit der Welle 3 beschleunigt. Da kein erneuter Anlagewechsel zwischen den Schaltzähnen und den Sperrzähnen erfolgt, bleibt der Gleichlaufzustand solange erhalten, daß die Schaltzähne 17, 18 ungestört in die Kuppelverzahnung 32 eingreifen können.

Grundsätzlich ist es möglich, die Schrägflächen 19 und 20 der Schaltverzahnung 16 asymmetrisch und mit unterschiedlichen Winkeln auszulegen. Um jedoch die Teilevielfalt zu reduzieren und Montagefehler zu vermeiden, ist es am vorteilhaftesten, die Schrägflächen 19, 20 und die Sperrflächen 22, 23 sowie die dazugehörigen Kuppelzähne 33 symmetrisch zu gestalten.

EP 0 561 915 B1

Bezugszeichen

| | | | | |
|---|---|---|---|---|
| 1 | Eingangswelle | | 31 | Kupplungskörper |
| 2 | Wälzlager | | 32 | Kuppelverzahnung |
| 3 | Welle | | 33 | Kuppelzähne |
| 4 | Zahnrad | | 34 | Muffenführung |
| 5 | Zahnrad | | | |
| 6 | Vorgelegewelle | | | |
| 7 | Zahnrad für den 1. Gang | | | |
| 8 | Zahnrad für den 2. Gang | | | |
| 9 | Zahnrad für den Rückwärtsgang | | | |
| 10 | Zahnrad | | | |
| 11 | Zahnrad | | | |
| 12 | Schaltkupplung | | | |
| 13 | Schaltkupplung | | | |
| 14 | Muffe | | | |
| 15 | Verschiebezahnrad | | | |
| 16 | Schaltverzahnung | | | |
| 17 | Schaltzähne | | | |
| 18 | Schaltzähne | | | |
| 19 | Schrägflächen | | | |
| 20 | Schrägflächen | | | |
| 21 | Schaltrichtung | | | |
| 22 | Sperrflächen | | | |
| 23 | Sperrflächen | | | |
| 24 | Sperrzähne | | | |
| 25 | Sperrzähne | | | |
| 26 | Sperrzähne | | | |
| 27 | Sperrverzahnung | | | |
| 28 | Synchronisierring | | | |
| 29 | Gegenkonus | | | |
| 30 | Reibkonus | | | |

**Patentansprüche**

1. Schaltkupplung (12, 13) mit einer Synchronisiereinrichtung, die einen Kupplungskörper (31), der mit einem drehbar auf einer Welle (3) gelagerten Zahnrad (10, 11) drehfest verbunden ist und Kuppelzähne (33) sowie einen Reibkonus (30) aufweist, einen Synchronisierring (28) mit einem Gegenkonus (29) und Sperrzähnen (24, 25, 26) und eine Muffe (14) hat, die Schaltzähne (17, 18) besitzt, von denen wenigstens ein Teil über stirnseitige Schrägflächen (19, 20) mit Sperrflächen (22, 23) an den Sperrzähnen (24, 25, 26) zusammenarbeitet, und die auf einer drehfest mit der Welle (3) verbundenen Muffenführung (34) axial

5

verschiebbar geführt ist, dadurch **gekennzeichnet**, daß die Sperrzähne (24, 25, 26) in Umfangsrichtung unterschiedlich breit sind, so daß die schmaleren (24) in Räumen zwischen den Schaltzähnen (17, 18) ein größeres Spiel haben als die breiteren (25, 26), und daß beim Schalten die Sperrflächen (22, 23) der schmaleren Sperrzähne (24) eher die Schrägflächen (19, 20) der Schaltzähne (17, 18) berühren als die breiteren Sperrzähne (25, 26).

2. Schaltkupplung nach Anspruch 1, dadurch **gekennzeichnet**, daß die breiteren Sperrzähne (25) axial kürzer sind als die schmaleren (24).

3. Schaltkupplung nach Anspruch 1, dadurch **gekennzeichnet**, daß die Schaltzähne (18), die die Zwischenräume für die breiteren Sperrzähne (26) bilden, axial kürzer sind als die übrigen Schaltzähne (17).

4. Schaltkupplung nach Anspruch 1, dadurch **gekennzeichnet**, daß das Verhältnis der Anzahl der schmaleren Sperrzähne (24) zu der Anzahl der breiteren Sperrzähne (25, 26) größer eins ist.

## Claims

1. Clutch (12, 13) with a synchronizing device, which has a clutch element (31), which is non-rotatably connected to a gear wheel (10, 11) rotatably supported on a shaft (3) and has coupling teeth (33) as well as a friction cone (30), a synchronizing ring (28) with a countercone (29) and locking teeth (24, 25, 26), and a sleeve (14) having shift teeth (17, 18), of which at least some cooperate via oblique end faces (19, 20) with locking faces (22, 23) on the locking teeth (24, 25, 26), and which is guided in an axially displaceable manner on a sleeve guide (34) connected non-rotatably to the shaft (3), characterized in that the locking teeth (24, 25, 26) in a peripheral direction differ in width so that the narrower ones (24) have a greater play in spaces between the shift teeth (17, 18) than the broader ones (25, 26), and that during shifting the locking faces (22, 23) of the narrower locking teeth (24) touch the oblique faces (19, 20) of the shift teeth (17, 18) earlier than the broader locking teeth (25, 26).

2. Clutch according to claim 1, characterized in that the broader locking teeth (25) are axially shorter than the narrower locking teeth (24).

3. Clutch according to claim 1, characterized in that the shift teeth (18) forming the spaces for the broader locking teeth (26) are axially shorter than the other shift teeth (17).

4. Clutch according to claim 1, characterized in that the ratio of the number of narrower locking teeth (24) to the number of broader locking teeth (25, 26) is greater than one.

## Revendications

1. Embrayage (12, 13) avec synchroniseur, comprenant un corps d'accouplement (31) qui est solidaire en rotation d'un pignon (10, 11) monté de manière rotative sur un arbre (3) et qui comporte des crabots d'accouplement (33) et un cône de friction (30), une bague de synchronisation (28) pourvue d'un cône opposé (29) et de dents de verrouillage (24, 25, 26), et un manchon (14) pourvu de crabots d'entraînement (17, 18) dont au moins une partie coopère, par des surfaces frontales obliques (19, 20), avec des surfaces d'arrêt (22, 23) situées sur les dents de verrouillage (24, 25, 26), le manchon étant coulissant axialement sur un porte-manchon (34) solidaire en rotation de l'arbre (3), **caractérisé** en ce que les dents de verrouillage (24, 25, 26) ont des largeurs différentes en direction circonférentielle, de sorte que les plus étroites (24) ont un plus grand jeu que les plus larges (25, 26) entre les crabots d'entraînement (17, 18), et en ce que, lors de l'enclenchement, les surfaces d'arrêt (22, 23) des dents de verrouillage plus étroites (24) touchent les surfaces obliques (19, 20) des crabots d'entraînement (17, 18) plus tôt que les dents de verrouillage plus larges (25, 26).

2. Embrayage selon la revendication 1, **caractérisé** en ce que les dents de verrouillage plus larges (25) sont plus courtes axialement que les plus étroites (24).

3. Embrayage selon la revendication 1, **caractérisé** en ce que les crabots d'entraînement (18) qui définissent les intervalles destinés aux dents de verrouillage plus larges (26) sont plus courts axialement que les autres crabots d'entraînement (17).

4. Embrayage selon la revendication 1, **caractérisé** en ce que le rapport entre le nombre des dents de verrouillage plus étroites (24) et le nombre des dents de verrouillage plus larges (25, 26) est supérieur à un.

FIG.1

I G.

II G.

III G.

R.G.

FIG.2

FIG.3